# EUROPEAN PATENT APPLICATION

(11) **EP 4 620 810 A1**
(43) Date of publication of application: **24.09.2025**
(21) Application number: 22965467.8
(22) Date of filing: 16.11.2022
(51) Int. Cl.: B64C 27/22

(54) **DUAL-ROTOR TILT AIRCRAFT AND FLIGHT CONTROL METHOD THEREFOR**

(71) Applicant: Chengdu Nexfun Technology Co., Ltd., Chengdu, Sichuan 610000 (CN)
(72) Inventor: LIU, Zefeng, Chengdu, Sichuan 610000 (CN)
(74) Representative: ZHAOffice SPRL
(86) International application number: PCT/CN2022/132182
(87) International publication number: WO 2024/103279

(57) **Abstract**

Provided in the present application is a dual-rotor tilt aircraft and a fight control method therefor. The aircraft comprises: a fuselage body; a left tilt wing fixed on the leftside of the fuselage body; a left rotor fixed to the left tilt wing; a right tilt wing fixed on the right side of the fuselage body; a right rotor fixed to the right tilt wing; and a tail assembly, which is fixed at the tail of the fuselage body and comprises a vertical tail, a horizontal tail and a horizontal tail rotor, wherein the left rotor and the right rotor achieve the flight power and attitude control during vertical take-off and landing and the cruising of the aircraft. The aircraft of the present application can tilt independently on the left and right sides and be actuated in various modes according to flight conditions, the wingspan of the aircraft not only can tilt, but can also be folded; and implementing the present application can achieve vertical take-off and landing, high-speed cruising, and stable transition between vertical hovering and high-speed cruising, and is also highly economical in use.

## Description

### TECHNICAL FIELD

The present application relates to the field of the aircraft, and specially relates to a dual-rotor tilt aircraft and flight control method therefor.

### BACKGROUND

Amid global road traffic congestion, there is an urgent need to develop modern, compact manned civil aircraft capable of aerial mobility. Such aircraft must exhibit enhanced maneuverability, user-friendliness for non-professional pilots, operation without dedicated infrastructure (e.g., airports), and multiple safety redundancies.

Existing aircraft struggle to maintain stable flight attitudes during hovering or low-speed conditions. Furthermore, conventional designs typically tilt only the rotors or propellers, not the wingspan.

Thus, it is imperative to design a novel aircraft to address these limitations.

### SUMMARY

The objective of the present application is to provide a dual-rotor tilt aircraft with independently tiltable left and right modules and a corresponding flight control method, enabling vertical take-off and landing and high-speed cruise capabilities.

The present application provides a dual-rotor tilt aircraft, comprises a fuselage body, further comprises a left tilt wing, which is fixed on the leftside of the fuselage body ; a left rotor, which is fixed to the left tilt wing; a right tilt wing, which is fixed on the right side of the fuselage body ; a right rotor, which is fixed to the right tilt wing ; and a tail assembly, which is fixed at the tail of the fuselage body and comprises a vertical tail, a horizontal tail and a horizontal tail rotor, wherein the left rotor and the right rotor achieve a flight power and attitude control during vertical take-off and landing and cruising of the aircraft.

Furthermore, the left rotor adopts a positive pitch design, and the right rotor adopts a reverse pitch design; or the left rotor adopts a reverse pitch design, and the right rotor adopts a positive pitch design.

Furthermore, the horizontal tail comprises a left horizontal tail located on the left side of a tail of the fuselage body, and a right horizontal tail fixed to the right side of the tail of the fuselage body, and the vertical tail is located between the left horizontal tail and the right horizontal tail.

Furthermore, it further comprises a servo located within the fuselage body, wherein the left tilt wing and the right tilt wing are respectively connected to the servo by a shaft.

Furthermore, it further comprises a left folding wing fixed to an outer side of the left tilt wing and foldable relative to the left tilt wing, and a right folding wing fixed to an outer side of the right tilt wing and foldable relative to the right tilt wing.

Furthermore, it further comprises angle position sensors installed within the left folding wing, the right folding wing, the left tilt wing, and the right tilt wing.

Furthermore, it further comprises a left rotor swashplate located on the left rotor and a right rotor swashplate located on the right rotor.

The present application further provides a flight control method for the dual-rotor tilt aircraft, the method is as follows:
during vertical take-off and landing, the left rotor and the right rotor, together with the left tilt wing and the right tilt wing, maintain a vertical orientation relative to ground, the left rotor and the right rotor rotate at high speed to generate lift, causing the aircraft to ascend; during ascent, synchronous forward/backward tilting of the left tilt wing and the right tilt wing tilt enables forward/backward movement of the aircraft, while asynchronous tilting achieves rotation; when there is a lift difference between the left rotor and the right rotor, roll can be achieved;
during cruise mode, the left tilt wing and the right tilt wing pivot to a horizontal position parallel to the ground, and the left rotor and the right rotor act as thrust sources, while lift is provided by the left tilt wing and the right tilt wing ; synchronous deflection of the left tilt wing and the right tilt wing adjusts lift, while asynchronous deflection induces roll motion; the left horizontal tail and the right horizontal tail control the aircraft's pitch and yaw attitude, and the vertical tail controls heading.

Furthermore, during vertical take-off and landing, forward/backward tilting of the left rotor swashplate and the right rotor swashplate creates a lift differential, which, combined with the horizontal tail rotor, enables mid-air attitude adjustment.

Furthermore, during cruise mode, the left horizontal tail and right horizontal tail control the aircraft's heading attitude, while the vertical tail controls yaw. During cruise mode, the left horizontal tail and the right horizontal tail control the aircraft's pitch and yaw attitude, while the vertical tail controls heading.

The aircraft of the present application can tilt independently on the left and right sides and be actuated in various modes according to flight conditions, the wingspan of the aircraft not only can tilt, but can also be folded; and implementing the present application can achieve vertical take-off and landing, high-speed cruising, and stable transition between vertical hovering and high-speed cruising, and is also highly economical in use.

By reviewing the following detailed description of specific embodiments of the present application in conjunction with the accompanying drawings, those skilled in the art will better understand the aforementioned and other objectives, advantages, and features of the present application.

### BRIEF DESCRIPTION OF THE DRAWINGS

Specific embodiments of the present application will be described in detail below with reference to the drawings in an exemplary and non-limiting manner. Identical reference numerals in the drawings denote the same or similar components/parts. It should be understood by those skilled in the art that these drawings are not necessarily drawn to scale. In the drawings:
Fig. 1 is a schematic structural diagram of the dual-rotor tilt aircraft according to an embodiment of the present application;
Fig. 2 is a standalone schematic diagram of the tail assembly of the dual-rotor tilt aircraft according to the embodiment;
Fig. 3 is a partial enlarged view of the tail assembly of the dual-rotor tilt aircraft according to the embodiment.

### DETAILED DESCRIPTION OF THE PREFERRED EMBODIMENT

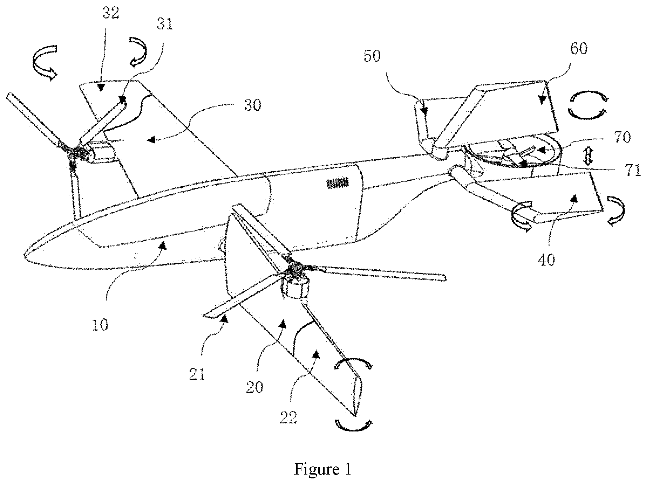

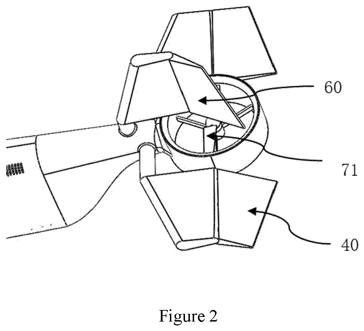

The present application provides a dual-rotor tilt aircraft, as shown in Figure 1 and 2, it comprises a fuselage body 10, a left tilt wing 20, which is fixed on the leftside of the fuselage body 10; a left rotor 21, which is fixed to the left tilt wing 20; a right tilt wing 30, which is fixed on the right side of the fuselage body 10; a right rotor 31, which is fixed to the right tilt wing 30; and a tail assembly, which is fixed at the tail of the fuselage body 10. Wherein the left rotor 21 and the right rotor 31 achieve a flight power and attitude control during vertical take-off and landing and cruising of the aircraft.

Wherein, the tail assembly comprises a left horizontal tail 40 located on the left side of a tail of the fuselage body 10, and a right horizontal tail 50 fixed to the right side of the tail of the fuselage body 10, a vertical tail 60 fixed on the tail of the fuselage body 10 and located between the left horizontal tail 40 and the right horizontal tail 50, a horizontal tail rotor 70 fixed on the tail of the fuselage body 10 and a plurality of tail rotor blades 71 mounted on the horizontal tail rotor 70.

The left tilt wing 20 and the right tilt wing30 are axially fixed to the fuselage body 10. The aircraft of the present application further includes a servo (not shown) housed within the fuselage body 10. The left tilt wing 20 and the right tilt wing30 are connected to the servo via respective shafts, enabling 360° axial rotation of the left tilt wing 20 and the right tilt wing 30 under the actuation of the servo. This rotation synchronizes the deflection of the left tilt wing 20, the right tilt wing 30, the left rotor 21, and the right rotor 31, which is utilized for vertical take-off and landing and cruise control of the aircraft.

The servo may be an electric servo or a hydraulic servo.

When the left tilt wing 20 and the right tilt wing 30 undergo asymmetric deflection, they are used for course correction during vertical take-off and landing and roll control during cruise. The thrust differential between the left tilt wing 20 and the right tilt wing30 enables roll maneuvers during vertical take-off and landing.

The left folding wing 22 tilts synchronously with the left tilt wing 20, and the right folding wing 32 tilts synchronously with the right tilt wing 30. During stowage or high-speed cruise, the folding wings fold rearward to minimize stowage space or reduce aerodynamic drag.

The left tilt wing 20 and the left folding wing 22 collectively form the left wingspan of the aircraft, while the right tilt wing 30 and the right folding wing 32 form the right wingspan. Both wingspans are capable of tilt and fold operations.

Notably, the folding wings are optional in the present application. Their absence does not compromise the technical efficacy of the application.

The aircraft of the present application further includes angular position sensors (not shown), which are installed within the left tilt wing 20, the left folding wing 22, the right tilt wing 30, and the right folding wing 32, enabling the servo to precisely acquire the tilt or folding angles.

The left rotor 21 employs a positive pitch design, while the right rotor 31 employs a reverse pitch design; or the left rotor 21 employs a reverse pitch design, while the right rotor 31 employs a positive pitch design. This configuration cancels out reverse torque.

Both the left rotor 21 and right rotor 31 comprise at least two blades.

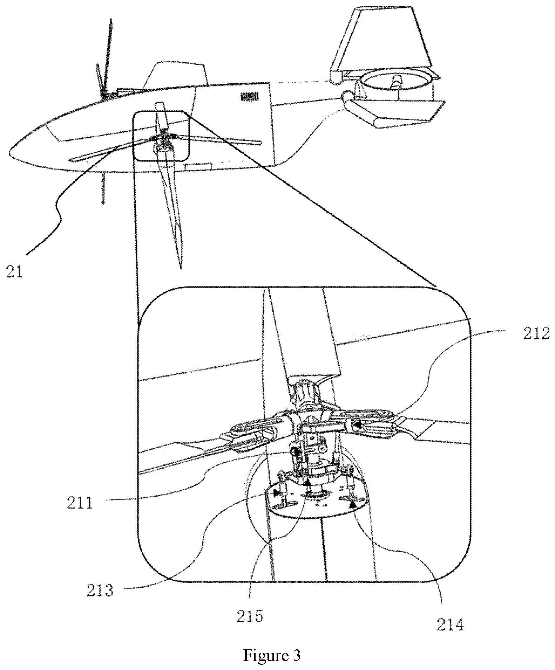

As shown in Fig. 3, the aircraft further includes: a left rotor linkage 211 securing the left rotor 21 to the left tilt wing 20; a left blade grip 212 fixing the blades of the left rotor 21 to the left rotor linkage 211; a left front swashplate lift linkage 213 mounted forward of the left rotor linkage 211; a left rear swashplate lift linkage 214 mounted rearward of the left rotor linkage 211; a left rotor swashplate 215 positioned on the left rotor 21 between the left front swashplate lift linkage 213 and the left rear swashplate lift linkage 214.

Under the actuation of an internal actuator, the left front swashplate lift linkage 213 and the left rear swashplate lift linkage 214 perform relative motion, tilting the left rotor swashplate 215 forward or backward. The synchronized movement of the left front swashplate lift linkage 213 and the left rear swashplate lift linkage 214 drives the left blade grip 212 to pivot, thereby altering the pitch angle of the left rotor 21.

Similarly, the aircraft includes: a right rotor linkage (not shown) securing the right rotor 31 to the right tilt wing 30; a right blade grip (not shown) fixing the blades of the right rotor 31 to the right rotor linkage; a right front swashplate lift linkage (not shown) mounted forward of the right rotor linkage; a right rear swashplate lift linkage (not shown) mounted rearward of the right rotor linkage; a right rotor swashplate (not shown) positioned on the right rotor 31 between the right front swashplate lift linkage and the right rear swashplate lift linkage.

Under the actuation of an internal actuator, the right front swashplate lift linkage and the right rear swashplate lift linkage perform relative motion, tilting the right rotor swashplate forward or backward. The synchronized movement of the right front swashplate lift linkage and the right rear swashplate lift linkage drives the right blade grip to pivot, thereby altering the pitch angle of the right rotor 31.

The left rotor 21 and the right rotor 31 utilize the lift differential generated by the forward/backward tilting of the left rotor swashplate 215 and the right rotor swashplate, in conjunction with the horizontal tail rotor 70, to achieve aircraft horizontal attitude control.

The horizontal tail rotor 70 is horizontally mounted at the tail of the aircraft and actively provides additional lift/thrust to regulate the horizontal orientation.

The tail rotor blades 71 are adjustable between positive and negative pitch to generate bidirectional thrust.

The tail rotor blades 71 may comprise two or more blades (e.g., three blades, four blades, five blades, etc.).

The horizontal tail rotor 70 and vertical stabilizer 60 can pivot as a whole or employ partial control surface deflection. The tail rotor rotates at a constant speed, and the pitch angle of the tail rotor blades 71 synchronizes with the horizontal stabilizers (including the left horizontal tail 40 and right horizontal tail 50) to generate lift/thrust for attitude control.

The vertical stabilizer 60 deflects during cruise to correct yaw.

The left horizontal tail 40 and the right horizontal tail 50 are arranged laterally on either side of the horizontal tail rotor 70 to avoid airflow interference from the tail rotor.

The flight control method of the aircraft is as follows:
during vertical take-off and landing, the left rotor 21 and the right rotor 31, together with the left tilt wing 20 and the right tilt wing 30, maintain a vertical orientation relative to ground, the left rotor 21 and the right rotor 31 rotate at high speed to generate lift, causing the aircraft to ascend; during ascent, synchronous forward/backward tilting of the left tilt wing 20 and the right tilt wing 30 tilt enables forward/backward movement of the aircraft, while asynchronous tilting achieves rotation; when there is a lift difference between the left rotor 21 and the right rotor 31, roll can be achieved; forward/backward tilting of the left rotor swashplate and the right rotor swashplate creates a lift differential, which, combined with the horizontal tail rotor 70, enables mid-air attitude adjustment. The aircraft maintains stable attitude control in all flight states, including extreme orientations. Regardless of the flight state, the aircraft's attitude can be stably maintained in a specific position, such as the aircraft facing downward or upward.

During cruise mode, the left tilt wing 20 and the right tilt wing 30 pivot to a horizontal position parallel to the ground, and the left rotor 21 and the right rotor 31 act as thrust sources, while lift is provided by the left tilt wing 20 and the right tilt wing 30; synchronous deflection of the left tilt wing 20 and the right tilt wing 30 adjusts lift, while asynchronous deflection induces roll motion; the left horizontal tail 40 and the right horizontal tail 50 control the aircraft's pitch and yaw attitude, and the vertical tail 60 controls heading.

Regarding the horizontal tail rotor 70, its functions include two aspects: active airflow control of the aircraft's attitude during hover and low-speed cruise, and when the aircraft encounters shifts in the forward and rear center of gravity, it actively provides additional upward or downward thrust to maintain balance.

Regarding the folding wings, due to the fact that the tilting wings used in this application are designed to be relatively wide for stability at low speeds, they create considerable drag during high-speed cruise. The backward folding of the wings reduces drag, thereby achieving higher flight efficiency. When the aircraft is stored in the hangar, the wings can fold to a larger angle, reducing the occupied ground area.

Implementation of safety redundancy: in cruising mode, this application allows for the failure of one or more power systems. The pilot can achieve gliding without power by controlling the wing span and the horizontal and vertical tail wings, which significantly increases flight safety in the event of abnormalities.

The lift generated by the rotor is achieved by altering the pitch of the blades.

This application enables the aircraft to maintain various attitudes in any flight state: vertical takeoff and landing, horizontal hover, left and right wing tilt, horizontal cruise, nose-up hover, nose-down hover, nose-up cruise, and nose-down cruise.

The horizontal tail rotor 70 of this application has an adjustable pitch, both positive and negative, and works in coordination with the tilting wings, allowing the aircraft to maintain various attitudes in any flight state. The wings tilt independently on the left and right, with various actuations depending on the flight conditions. The wings of the aircraft not only tilt but can also be folded. The folding wings of the aircraft are not only used for storage but also help reduce the effort during cruising. Implementing the present application can achieve vertical take-off and landing, high-speed cruising, and stable transition between vertical hovering and high-speed cruising, and is also highly economical in use.

At this point, those skilled in the art should recognize that, although this application has been described in detail with several exemplary embodiments, many other variations or modifications in accordance with the principles of this application can still be directly determined or derived from the disclosed content without departing from the spirit and scope of the application. Therefore, the scope of this application should be understood and construed to cover all such variations or modifications.

## Claims

1. A dual-rotor tilt aircraft, comprises a fuselage body (10), **characterized in that**, further comprises a left tilt wing (20), which is fixed on the leftside of the fuselage body (10); a left rotor (21), which is fixed to the left tilt wing (20); a right tilt wing (30), which is fixed on the right side of the fuselage body (10); a right rotor (31), which is fixed to the right tilt wing (30); and a tail assembly, which is fixed at the tail of the fuselage body (10) and comprises a vertical tail (60), a horizontal tail and a horizontal tail rotor (70), wherein the left rotor (21) and the right rotor (31) achieve a flight power and attitude control during vertical take-off and landing and cruising of the aircraft.

2. The dual-rotor tilt aircraft according to claim 1, **characterized in that** the left rotor (21) adopts a positive pitch design, and the right rotor (31) adopts a reverse pitch design; or the left rotor (21) adopts a reverse pitch design, and the right rotor (31) adopts a positive pitch design.

3. The dual-rotor tilt aircraft according to claim 1, **characterized in that** the horizontal tail comprises a left horizontal tail (40) located on the left side of a tail of the fuselage body (10), and a right horizontal tail (50) fixed to the right side of the tail of the fuselage body (10), and the vertical tail (60) is located between the left horizontal tail (40) and the right horizontal tail (50).

4. The dual-rotor tilt aircraft according to claim 1, **characterized in that** it further comprises a servo located within the fuselage body (10), wherein the left tilt wing (20) and the right tilt wing (30) are respectively connected to the servo by a shaft.

5. The dual-rotor tilt aircraft according to claim 1, **characterized in that** it further comprises a left folding wing (22) fixed to an outer side of the left tilt wing (20) and foldable relative to the left tilt wing (20), and a right folding wing (32) fixed to an outer side of the right tilt wing (30) and foldable relative to the right tilt wing (30).

6. The dual-rotor tilt aircraft according to claim 5, **characterized in that** it further comprises angle position sensors installed within the left folding wing (23), the right folding wing (33), the left tilt wing (20), and the right tilt wing (30).

7. The dual-rotor tilt aircraft according to claim 1, **characterized in that** it further comprises a left rotor swashplate located on the left rotor (21) and a right rotor swashplate located on the right rotor (31).

8. A flight control method for the dual-rotor tilt aircraft according to any one of claims 1-7, **characterized in that** the method is as follows:
during vertical take-off and landing, the left rotor (21) and the right rotor (31), together with the left tilt wing (20) and the right tilt wing (30), maintain a vertical orientation relative to ground, the left rotor (21) and the right rotor (31) rotate at high speed to generate lift, causing the aircraft to ascend; during ascent, synchronous forward/backward tilting of the left tilt wing (20) and the right tilt wing (30) tilt enables forward/backward movement of the aircraft, while asynchronous tilting achieves rotation; when there is a lift difference between the left rotor (21) and the right rotor (31), roll can be achieved;
during cruise mode, the left tilt wing (20) and the right tilt wing (30) pivot to a horizontal position parallel to the ground, and the left rotor (21) and the right rotor (31) act as thrust sources, while lift is provided by the left tilt wing (20) and the right tilt wing (30); synchronous deflection of the left tilt wing (20) and the right tilt wing (30) adjusts lift, while asynchronous deflection induces roll motion; the left horizontal tail (40) and the right horizontal tail (50) control the aircraft's pitch and yaw attitude, and the vertical tail (60) controls heading.

9. The flight control method for the dual-rotor tilt aircraft according to claim 8, **characterized in that**, during vertical take-off and landing, forward/backward tilting of the left rotor swashplate and the right rotor swashplate creates a lift differential, which, combined with the horizontal tail rotor (70), enables mid-air attitude adjustment.

10. The flight control method for the dual-rotor tilt aircraft according to claim 8, **characterized in that**, during cruise mode, the left horizontal tail (40) and right horizontal tail (50) control the aircraft's heading attitude, while the vertical tail (60) controls yaw during cruise mode, the left horizontal tail (40) and the right horizontal tail (50) control the aircraft's pitch and yaw attitude, while the vertical tail (60) controls heading.
